(19) **Europäisches Patentamt**
**European Patent Office**
**Office européen des brevets**

(11) **EP 2 474 230 B1**

(12) **EUROPEAN PATENT SPECIFICATION**

(45) Date of publication and mention
of the grant of the patent:
**03.04.2013 Bulletin 2013/14**

(21) Application number: **10812040.3**

(22) Date of filing: **30.08.2010**

(51) Int Cl.:
*A23C 9/13* *(2006.01)*    *A23C 9/127* *(2006.01)*

(86) International application number:
**PCT/JP2010/064681**

(87) International publication number:
**WO 2011/024994 (03.03.2011 Gazette 2011/09)**

(54) **LOW-FAT OR FAT-FREE YOGHURT, AND PROCESS FOR PRODUCTION THEREOF**

JOGHURT MIT WENIG ODER OHNE FETT UND HERSTELLUNGSVERFAHREN DAFÜR

YOGHOURT A FAIBLE TENEUR EN MATIERES GRASSES OU SANS MATIERE GRASSE, ET PROCEDE DE FABRICATION ASSOCIE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **31.08.2009 JP 2009200888**

(43) Date of publication of application:
**11.07.2012 Bulletin 2012/28**

(73) Proprietors:
• **Ajinomoto Co., Inc.**
**Tokyo 104-8315 (JP)**
• **Amano Enzyme Inc.**
**Nagoya-shi**
**Aichi 460-8630 (JP)**

(72) Inventors:
• **MIWA, Noriko**
**Kawasaki-shi**
**Kanagawa 210-8681 (JP)**
• **OHASHI, Wakako**
**Kawasaki-shi**
**Kanagawa 210-8681 (JP)**

(74) Representative: **Strehl Schübel-Hopf & Partner**
**Maximilianstrasse 54**
**80538 München (DE)**

(56) References cited:
**WO-A1-2006/075772    WO-A1-2007/060288**
**WO-A1-2009/154212    WO-A1-2010/035825**
**JP-A- 2003 250 460    JP-A- 2003 250 482**

• **MILANOVIC S. ET AL.: 'Effect of transglutaminase and whey protein concentrate on textural characteristics of low fat probiotic yoghurt' MILCHWISSENSCHAFT vol. 64, no. 4, 2009, pages 388 - 392, XP008149515**
• **TOMOHIRO NOGUCHI: 'New approach to yoghurt coagulation - Effect of heat denaturation level of defatted milk (powder)' CHIKUSANBUTSU JUKYU KANKEI GAKUJUTSU KENKYU JOHO SHUSHU SUISHIN JIGYO HOKOKUSHO HEISEI 17 NENDO vol. 37, 2006, pages 39 - 44, XP008149512**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

[REFERENCE TO RELATED APPLICATION]

The present invention relates to a method obtaining a low-fat or fat-free yoghurt having richness and creamy-texture like a yoghurt produced with whole-fat milk, that is, whole-fat yoghurt.

BACKGROUND

It is expected for yoghurts to have not only delicious taste as foods but also an effect as health foods. In recent years, growing a concern about health, consumers who care of calories in foods are increased; and a demand for products appealing "low-fat", "fat-free" and "low-calories" has been expanding. However, a taste of dairy product having low amount of a milk fat such as fat-free or low-fat is very plain, sloppy and lack of full-bodied taste, so that it has been never satisfied for consumers. For this reason, in order to make up for deliciousness and flavor, a low-fat and fat-free typed yoghurt is made up for with sugar and a low-sugar typed yoghurt is made up for with fat, whereby, it is difficult to realize low-calories for such yoghurts. Consequently, it has been demanded to develop a technology for keeping both of fat-free/low-fat and low-calories.

In order to solve the above problems, methods are proposed: a method making up for a decline of full-bodied taste with animal protein hydrolysate known as a seasoning (patent document 1), a method to use milk fat globule membrane component (patent document 2), a method to blend a fat-protein complex with oil-in-water emulsified composition (patent document 3) and the like. However, consumer's demands were not satisfied enough with them because they become expensive due to multiple steps in each method, applicable food products are limited, and further these effects are not satisfactory. In addition, it has been attempted to replace a whole fat or at least a part thereof with using protein series such as "SIMPLESSE", whey-protein concentrate (patent document 4). However, flavor and texture of food products obtained by adding a fat replacing product(s) produced with a conventional method(s) are different from original fat, are not satisfied, and it has not come to substitute for fat completely.

In addition, gums used widely in yoghurt, such as naturally-derived agar and gelatin, carrageenan, xanthane gum, exert effects on an increase in strength of curd, a prevention of whey separation, an advancement of a form maintaining property when preserving a product, and further an improvement of curd structure and the like. However, there are problems that an inherent property of gums influences texture to cause a lack of natural feeling, a display of an additive is needed, and a fat-replacing effect of texture is not enough satisfied.

In the meanwhile, a protein deamidating enzyme, which acts directly on an amide group in proteins, is an enzyme to catalyze a reaction of deamidation. Thereby it causes transformation of glutamine residue into glutamic acid residue and generation of carboxylic group, which results in an increase of negative charge, an increase of electrostatic repulsive force, a decrease of isoelectric point, an increase of hydration capability etc. of protein. As a result, it has been known that various improvements of functionalities such as an increase of solubility of protein and dispersion of protein in water, an improvement of emulsification ability and emulsion stability etc. are rendered (non-patent documents 1 and 2, patent documents 5-8).

There are patent documents 5, 7 and 8 to disclose a method of using the protein deamidating enzyme in food products. Among these prior documents, there is a description relating an alteration of functional properties of wheat gluten, milk protein (mainly, whey protein) using said enzyme, and especially in patent document 8, there is a description relating a texture improving effect as "improvement in smoothness" in the case where the protein deamidating enzyme is used for dairy product such as yoghurt and cheese. However, it is not mentioned about an effect for a fat-free or low-fat yoghurt. That is, conventionally, in manufacturing a fat-free or low-fat yoghurt, a trial of the fat substitution by use of said enzyme, i.e., the trial to put close to richness and creamy texture-like the whole fat yogurt has not been made yet.

[Patent Document 1] Japanese Patent Kokai Publication No. JP56-124342A
[Patent Document 2] Japanese Patent Kokai Publication No. JP07-236451A
[Patent Document 3] Japanese Patent Kokai Publication No. JP08-170A
[Patent Document 4] Japanese Patent Kokoku Publication No. JP07-22497B
[Patent Document 5] Japanese Patent Kokai Publication No. JP-P2000-50887A
[Patent Document 6] Japanese Patent Kokai Publication No. JP-P2001-218590A
[Patent Document 7] Japanese Patent Kokai Publication No. JP-P2003-250460A
[Patent Document 8] WO2006/075772

[Non-Patent Document 1] Yamaguchi et al., Appl. Environ. Microbiol., 66, p.3337-3343 (2000)
[Non-Patent Document 2] Eur. J. Biochem 268 p.1410-1421 (2001)

SUMMARY

The present invention aims to provide a low-fat or fat-free yoghurt having richness and creamy-texture like a yoghurt produced with a material milk which is not adjusting the amount of fat (whole-fat milk), and to provide a method to manufacture easily such a low-fat or fat-free yoghurt using with a low-fat or fat-free material milk.

In order to accomplish the above purpose, inventors of the present invention have found that physical properties will become weak remarkably, and also it will liquefy, and a rich texture of creaminess will be lost while the smoothness of yogurt improves with advance of the deamidation reaction of the milk protein, in the case where the protein deamidating enzyme (so far known as having the effect as "improvement in smoothness") is solely used for the low-fat or fat-free material milk. Then, as a result of having repeated research wholeheartedly, the present inventors have found that in the case where mass of milk protein of the fat-free or low-fat yoghurt is increased to be within a proper range, and deamidation ratio of milk protein is to be within a proper range, the yogurt of the same creamy texture as whole-fat yogurt is obtained maintaining physical properties, even when the fat-free or low-fat material milk is used. More specifically, it is found that the yogurt of the same creamy texture as whole-fat yogurt is obtained without degradation of physical properties in the case where a proper amount of a milk protein, such as a defatted milk powder, that has been deamidated with a protein deamidating enzyme, is added to a fat-free or low-fat milk raw material, or alternatively, a proper amount of a casein-containing milk protein, such as a defatted milk powder, is added to a fat-free or low-fat milk raw material, and subsequently, the resulting mixture is subjected to a deamidation treatment with a protein deamidating enzyme so that the deamidation ratio reaches a proper level, to prepare the fat-free or low-fat milk raw material mixed-solution, in which the mass of milk protein and the deamidation ratio of milk protein are within a proper range; and then yoghurt is prepared using the milk raw material mixed-solution. That is, the present invention is as follows.

(1) A method for producing a yoghurt, comprising: a) a step of adding a casein-containing milk protein to a fat-free milk in which milk fat content is 0.0% by weight or more and less than 0.5% by weight to prepare a milk raw material mixed-solution in which milk protein content is 4.5% by weight or more and 4.8% by weight or less; b) a step of adding and acting a protein deamidating enzyme to the milk raw material mixed-solution to prepare a deamidated milk raw material mixed-solution in which a deamidation ratio X of the milk protein in the milk raw material mixed-solution meets a following formula:

$$-39.3 \times \text{milk protein content (\%)} + 198 \leqq X (\%) \leqq 64$$

and c) a step of adding a starter to the deamidated milk raw material mixed-solution.

(2) A method for producing a yoghurt, comprising: a) a step of adding a casein-containing milk protein to a fat-free milk in which milk fat content is 0.0% by weight or more and less than 0.5% by weight to prepare a milk raw material mixed-solution in which milk protein content is 4.8% by weight or more and 5.0% by weight or less; b) a step of adding and acting a protein deamidating enzyme to the milk raw material mixed-solution to prepare a deamidated milk raw material mixed-solution in which a deamidation ratio of the milk protein in the milk raw material mixed-solution is 9% or more and 64% or less; and c) a step of adding a starter to the deamidated milk raw material mixed-solution.

(3) A method for producing a yoghurt, comprising: a) a step of adding and acting water and a protein deamidating enzyme to a casein-containing milk protein to prepare a deamidated milk protein; b) a step of adding the deamidated milk protein to a fat-free milk in which milk fat content is 0.0% by weigh or more and less than 0.5% by weight to prepare a milk raw material mixed-solution in which milk protein content is 4.5% by weight or more and 4.8% by weight or less and a deamidation ratio X of the milk protein in the milk raw material mixed-solution meets a following formula:

$$-39.3 \times \text{milk protein content (\%)} + 198 \leqq X (\%) \leqq 64$$

and c) a step of adding a starter to the milk raw material mixed-solution.

(4) A method for producing a yoghurt, comprising: a) a step of adding and acting water and a protein deamidating enzyme to a casein-containing milk protein to prepare a deamidated milk protein; b) a step of adding the deamidated milk protein to a fat-free milk in which milk fat content is 0.0% by weigh or more and less than 0.5% by weight to prepare a milk raw material mixed-solution in which milk protein content is 4.5% by weight or more and 4.8% by weight or less and a deamidation ratio X of the milk protein in the milk raw material mixed-solution is 9% or more and 64% or less; and c) a step of adding a starter to the milk raw material mixed-solution.

(5) A method for producing a yoghurt, comprising: a) a step of adding a casein-containing milk protein to a low-fat milk in which milk fat content is 0.5% by weight or more and less than 1.5% by weight to prepare a milk raw material mixed-solution in which milk protein content is 4.0% by weight or more and 4.5% by weight or less; b) a step of adding and acting a protein deamidating enzyme to the milk raw material mixed-solution to prepare a deamidated milk raw material mixed-solution in which a deamidation ratio X of the milk protein in the milk raw material mixed-solution meets a following formula:

$$-44.3 \times \text{milk protein content (\%)} + 201 \leqq X (\%) \leqq 64$$

and c) a step of adding a starter to the deamidated milk raw material mixed-solution.

(6) A method for producing a yoghurt, comprising: a) a step of adding and acting water and a protein deamidating enzyme to a casein-containing milk protein to prepare a deamidated milk protein; b) a step of adding the deamidated milk protein to a low-fat milk in which milk fat content is 0.5% by weight or more and 1.5% by weight or less to prepare a milk raw material mixed-solution in which milk protein content is 4.0% by weight or more and 4.5% by weight or less and a deamidation ratio X of the milk protein in the milk raw material mixed-solution meets a following formula:

$$-44.3 \times \text{milk protein content (\%)} + 201 \leqq X (\%) \leqq 64$$

and c) a step of adding a starter to the milk raw material mixed-solution.

(7) The method according to any one of (1) to (6); wherein the protein deamidating enzyme is an enzyme derived from the genus Chryseobacterium.

(8) The method according to any one of (1) to (7); wherein additive amount of the protein deamidating enzyme is 0.01-100 units per 1g of the milk protein.

(9) The method according to any one of (1) to (8); wherein the milk protein is defatted milk powder.

(10) A yoghurt produced by the method according to any one of (1) to (9).

EFFECT OF THE INVENTION

According to the present invention, a fat-free or low-fat yoghurt having richness and creamy-texture like a yoghurt produced with a material milk in which the amount of fat is not adjusted (whole-fat milk) can be obtained easily.

BEST MODE FOR CARRYING OUT THE INVENTION

A fat-free milk defined in the present invention is mammalian milk, such as cow milk, goat milk, in which a part of a milk fat portion is removed from raw milk, and milk fat content is adjusted to 0.0% by weight or more and less than 0.5% by weight, and powdered milk and concentrated milk thereof; and a low-fat milk is mammalian milks, such as cow milk, goat milk, in which milk fat content is adjusted to 0.5% by weight or more and 1.5% by weight or less, and powdered milk and concentrated milk thereof. In addition, under Japanese compositional standards for milk fat portion in milk and the like, the low-fat milk includes a milk fat which portion is 0.5% by weight or more and 1.5% by weight or less, and the fat-free milk includes less than 0.5% by weight the same. (hereinafter, % indicates % by weight in the case where not written in particular specifically.)

In the present invention, the milk protein added to a fat-free or low-fat material milk is a casein-containing milk protein, and is casein or a mixture of casein and whey (defatted milk powder, total milk protein and the like). Even if ingredients, such as proteins other than milk proteins, inorganic salt, sugars, fats coexist, it is satisfactory at all. In addition, the most suitable milk protein is the defatted milk powder in which milk is powdered after (partial) defatting with a separator or a milk protein concentrate (MPC) obtainable from a membrane treatment after (partial) defatting.

The kind of the protein deamidating enzyme used for the present invention is not limited as far as it possesses a function to directly act on amide group in a protein, so as to cleave a peptide bonding and deamidate the protein without linking. As an example of such an enzyme, a protein deamidating enzyme derived from the genus Chryseobacterium, Flavobacterium or Empedobacter as disclosed in JP2000-50887A (Reference Document 1), JP2001-21850A (Reference Document 2) and WO2006/075772 (Reference Document 3), a protein-glutaminase, commercially available in the market, derived from the genus Chryseobacterium and the like are exemplified but not limited thereto. Preferably, an enzyme derived from the genus Chryseobacterium is used. As for transglutaminase, it is not included in a protein deamidating enzyme according to the present invention because when acting the transglutaminase on food materials, it brings a cross-linking reaction, with priority, in proteins and almost no deamidating reaction. Furthermore, the disclosures of the above Reference Documents 1 to 3 are incorporated herein in their entirety by reference thereto.

A protein deamidating enzyme can be prepared from a culture liquid for microorganism that produces the protein deamidating enzyme. Publicly known separation and purification methods of protein (such as centrifuging, UF concentration, salting-out, various kinds of chromatography with ion-exchanging resin, etc.) can be used as the preparation method of a protein deamidating enzyme. For example, culture liquid is centrifuged to separate bacteria cells, and then salting-out and chromatography, and the like may be combined to obtain target enzymes. When collecting enzymes from the interior of bacterial cells, bacterial the cells can be crushed by a pressure processing or ultrasonic processing, for example, and then separated and purified as described above to obtain target enzymes. Bacterial cells may be recovered from a culture liquid by filtration or centrifuge, etc. prior to the processing steps above explained (such as crushing of bacterial cells, separation and purification). The enzyme may be powdered by a drying method such as a freeze drying or vacuum drying, etc., and an appropriate bulking agent or drying auxiliary agent may be used at the drying step.

The activity of the protein deamidating enzyme in the present invention was measured by the following method:

(1) 0.1ml of an aqueous solution containing the protein deamidating enzyme was added to 1 ml of 0.2M phosphate buffer (pH6.5) containing 30mM Z-Gln-Gly, and incubated at 37°C for 10 minutes, and then the reaction was ceased by adding 1 ml of 0.4M TCA solution. 0.1ml of an aqueous solution containing the protein deamidating enzyme was added to a solution containing 1 ml of 0.2M phosphate buffer (pH6.5) containing 30mM Z-Gln-Gly and 1 ml of 0.4M TCA solution, and incubated for 10 minutes at 37°C to prepare a solution as a blank.

(2) An amount of ammonia generated by the reaction in the solution obtained in (1) was measured by using Ammonia-test Wako (manufactured by Wako Pure Chemical Industries, Ltd.). An ammonia concentration in a reaction solution was determined using a calibration curve indicating a relation between an ammonia concentration and variation of absorbance (at 630nm) prepared using an ammonia standard solution (ammonium chloride).

(3) An activity of a protein deamidating enzyme, where the amount of enzyme required to produce 1 $\mu$ mol of ammonia per 1 minute is defined as 1 unit, was calculated by the following formula.

$$\text{Enzymatic activity (u/mL)} = \text{the ammonium concentration in the reaction solution (mg/L)} \times (1/17.03) \times (\text{the volume of the reaction solution/the volume of the enzyme solution}) \times (1/10) \times Df$$

(17.03: molecular weight of ammonia, 2.1: fluid volume of enzyme reaction system, 0.1: volume of enzyme solution, 10: reaction time, Df: dilution rate of the enzyme solution)

There are two methods to increase the milk protein amount in the milk raw material mixed-solution for the production of the fat-free or low-fat milk yoghurt so as to be within proper range and also to adjust the deamidation ratio of the milk protein so as to be within proper range. In addition, in the Description of the present application, the fat-free or low-fat milk used for the yoghurt preparation may be called as the material milk, and the mixed solution prepared by adding and mixing the milk protein into the material milk may be called as the milk raw material mixed-solution.

The first method is a method in which the milk protein such as a defatted milk powder and the like is dissolved into the material milk to prepare the milk raw material mixed-solution, then the protein deamidating enzyme is activated after the milk protein content of the milk raw material mixed-solution is adjusted so as to be 4.0-5.0% by weight (pre-incubation method). In the present invention, the milk protein content in the milk raw material mixed-solution may be adjusted so as to be 4.0-5.0% by weight. The milk protein content added to the material milk may be calculated so that the milk protein content in the milk raw material mixed-solution is 4.5-5.0% by weight when the fat-free yoghurt is produced, and the milk protein content added to the material milk may be calculated so that the milk protein content in the milk raw material mixed-solution is 4.0-4.5% by weight when the low-fat yoghurt is produced, where the both calculations are based on the protein content in the material milk to be used (low-fat or fat-free milk). Furthermore, it can be considered that the milk protein content in yoghurt as the final product is almost the same as the milk protein content in the milk raw material mixed-solution because a change in the milk protein mass from lactic fermentation hardly occurs.

Subsequently, the protein deamidating enzyme is added to the milk raw material mixed-solution for reaction. In the present invention, it is important to perform the reaction so as to obtain an appropriate deamidation ratio according to the milk protein content in the milk raw material mixed-solution, and the enzymatic reaction conditions (such as an amount of the enzyme, reaction time, temperature, pH of the reaction solution etc.) for being such a state may be suitably set, in order that the deamidation ratio of the milk protein in the milk raw material mixed-solution is to be within a proper range. For example, in a case where the amount of enzyme is low, although the reaction time may be elongated, the general addition amount of the protein deamidating enzyme is preferably 0.01-100 units, and more preferably 0.1-25 units per 1g (dried weight) of milk protein. Preferable reaction temperature is 5-80°C, and more preferably 20-60°C. Preferable pH of the reaction solution is 2-10, and more preferably 4-8. Preferable reaction time is from 10 seconds to 48 hours, and more preferably from 10 minutes to 24 hours.

Although the proper deamidation ratio in the present invention is different depending on the milk protein content and the milk fat content in the milk raw material mixed-solution, the deamidation ratio (X) of the milk protein in the milk raw material mixed-solution may meet the following formula A), more preferably the following formula B) in a case where the milk protein content in the milk raw material mixed-solution (mixed-solution of the material milk and the added milk protein) is adjusted to 4.5-4.8% by weight for the fat-free yoghurt.

$$\text{Formula A) } -39.3 \times \text{ milk protein content (\%) in the milk raw material mixed-solution} + 198 \leqq X (\%) \leqq 64$$

$$\text{Formula B) } -39.3 \times \text{ milk protein content (\%) in the milk raw material mixed-solution} + 203 \leqq X (\%) \leqq 64$$

For example, the deamidation ratio is preferably 21-64%, and more preferably 26-64%, when the fat-free yoghurt is produced with a milk raw material mixed-solution having a milk protein content 4.5% and a milk fat content 0.1%. The deamidation ratio is preferably 15-64%, and more preferably 20-64%, when the fat-free yoghurt is produced with a milk raw material mixed-solution having a milk protein content 4.65% and a milk fat content 0.1%. The deamidation ratio is preferably 9-64%, and more preferably 14-64%, when the fat-free yoghurt is produced with a milk raw material mixed-solution having a milk protein content 4.8% and a milk fat content 0.1%.

The deamidation ratio (X) of milk protein in the milk raw material mixed-solution is preferably 9-64%, and more preferably 14-64%, when the milk protein content in the milk raw material mixed-solution is adjusted to 4.8-5.0% by weight for the fat-free yoghurt.

The deamidation ratio (X) of the milk protein in the milk raw material mixed-solution may meet the following formula C), more preferably the following formula D), when the milk protein content in the milk raw material mixed-solution is adjusted to 4.0-4.5% by weight for the low-fat yoghurt.

$$\text{Formula C) } -44.3 \times \text{ milk protein content (\%) in the milk raw material mixed-solution} + 201 \leqq X (\%) \leqq 64$$

$$\text{Formula D) } -44.3 \times \text{ milk protein content (\%) in the milk raw material mixed-solution} + 206 \leqq X (\%) \leqq 64$$

For example, when the low-fat yoghurt is produced with a milk raw material mixed-solution having a milk protein content 4.0% and a milk fat content 1.0%, the deamidation ratio is preferably 24-64%, and more preferably 29-64%. When the low-fat yoghurt is produced with a milk raw material mixed-solution having a milk protein content 4.15% and a milk fat content 1.0%, the deamidation ratio is preferably 17-64%, and more preferably 22-64%. When the low-fat yoghurt is produced with a milk raw material mixed-solution having a milk protein content 4.3% and a milk fat content 1.0%, the deamidation ratio is preferably 11-64%, and more preferably 16-64%. When the low-fat yoghurt is produced with a milk raw material mixed-solution having a milk protein content 4.45% and a milk fat content 1.0%, the deamidation ratio is preferably 4-64%, and more preferably 9-64%.

The second method is a method to add the preliminarily-modified deamidated milk protein with the protein deamidating enzyme (deamidated milk protein addition method). That is, it is a method such that the solution of milk protein such as defatted milk powder is treated with the protein deamidating enzyme to prepare a deamidated milk protein, and the dried-powdered deamidated milk protein, which is obtained by drying and powdering the deamidated milk protein, is added to the fat-free or low-fat milk to adjust the milk protein content in the milk raw material mixed-solution so as to be 4.0-5.0% by weight and to also adjust the deamidation ratio of the milk protein in the milk raw material mixed-solution so as to be in the proper range. Reaction conditions may be controlled appropriately to obtain an appropriate deamidation ratio, the additive amount of the protein deamidating enzyme is preferably 0.01-100 units, and more preferably 0.1-25 units per 1g (dried weight) the milk protein, while the protein deamidating enzyme reaction conditions (such as amount of enzyme, reaction time, temperature, pH of the reaction solution etc.) for preparing the deamidated milk protein are not particularly limited. Preferable reaction temperature is 5-80°C, and more preferably 20-60°C. Preferable pH for the reaction solution is 2-10, and more preferably 4-8. Preferable reaction time is from 10 seconds to 48 hours, and more preferably from 10 minutes to 24 hours. In addition, the proper deamidation ratio of the milk protein in the milk raw material mixed-solution is the same as that of the pre-incubation method described in paragraphs [0030]-[0038] in the Description of the present application.

The deamidation ratio used in the present invention shows to which degree glutamine residues in all the milk proteins contained in the milk raw material mixed-solution or yoghurt as the final product were deamidated with the protein deamidating enzyme. Given that the state where all glutamines in proteins in the milk raw material mixed-solution are deamidated is 100%. In a case where 13 units of the enzyme is added to 1g of the milk protein and the resulting mixture is subjected to react at 55°C for an hour, the deamidation reaction reaches saturation. Thereby, a maximum reaction volume (amount of ammonia) which shows 100% of the deamidation ratio can be obtained. That is, the deamidation ratio is obtained based on the following formula E) for the pre-incubation method, and the following formula F) for the deamidated milk protein addition method.

Formula E) The deamidation ratio (%) = [an amount of ammonia in the milk raw material mixed-solution after allowing the protein deamidating enzyme to act on the milk raw material mixed-solution] ÷ [an amount of ammonia in the milk raw material mixed-solution after allowing the same enzyme in an amount of 13 units per 1g milk protein to act on the same milk raw material mixed-solution for an hour at 55°C] X 100

Formula F) The deamidation ratio (%) = [an amount of ammonia in the milk protein solution after allowing the protein deamidating enzyme to act on the milk protein solution] ÷ [an amount of ammonia in the milk protein solution after allowing the same enzyme in an amount of 13 units per 1g milk protein to act on the same milk protein mixed-solution for an hour at 55°C ] × 100 × [the content of the added milk protein] ÷ [the content of the protein in the material milk + the content of the added milk protein]

The amount of ammonia in the milk raw material mixed-solution or in the milk protein solution can be measured by commercially available ammonia measuring kit after performing deproteinization operation by an acid (trichloro acetic acid, perchloric acid or the like). For example, to the milk raw material mixed-solution (as for the pre-incubation method) or the milk protein solution (as for the deamidated milk protein addition method) is added 12% trichloro acetic acid of the same quantity as said solution for deproteinization (the enzymatic reaction is also stopped at this time). Then, the amount of ammonia in the supernatant obtained by centrifugation (12,000 rpm, 5°C, 5 minutes) is measured using F-kit (Roche). In detail, 10 μl of the supernatant and 190 μl of 0.1M triethanolamine buffer (pH 8.0) are added to 100μ l of liquid reagent II (an attachment of the F-kit) and kept for 5 minutes at room temperature. After that an absorbance at 340 nm is measured using 100 μl of the resultant solution. 1.0 μ l of reagent III (an attachment of the F-kit, glutamate dehydrogenase) is added to the remaining 200 μ 1 of the solution and kept for 20 minutes at room temperature and then an absorbance at 340 nm is measured using the 200 μ 1 of the solution. An ammonia concentration in the supernatant is determined using a calibration curve indicating the relation between ammonia concentration and variation of absorbance (at 340 nm) prepared using an ammonia standard solution attached to the F-kit, and thereby the amount of ammonia in the milk raw material mixed-solution or the milk protein solution is determined. In addition, in a case where the measurement is out of the range of standard curve, the solution for measurement is diluted with water, and then measured.

The low-fat or fat-free yoghurt of the present invention is produced by using the milk raw material mixed-solution prepared by the method described above, in which the milk protein amount and the deamidation ratio are within the proper range. The process for producing a yoghurt may be a regular method; for example, the milk raw material mixed-solution, in which the milk protein content and the deamidation ratio are within the proper range, may be homogenized with a homogenizer or the like, by adding raw materials such as sugar and flavor thereto as necessary. Then, after sterilizing and cooling, a starter (lactobacillus, yoghurt in which useful lactobacillus remains, or the like) is added into the above sterilized and cooled solution, and then the low-fat or fat-free yoghurt may be produced by fermenting after charging the resulting mixture into a container, or by charging the fermented mixture into a container after fermenting the resulting mixture in a tank. In addition, yoghurt may be either set-type or stirred-type.

While the present invention will be explained in detail with examples and comparative examples as follows, the present invention is not restricted at all by such examples.

EXAMPLE 1

The low-heat defatted milk powder (Yotsuba NyugyoCo., protein 35.6%) was added to commercially available fat-free milk (Koiwai fat-free milk, Kiwai Nyugyo Co., milk fat 0.1%, protein 3.5%) to adjust the protein content to 4.50%, 4.65%, 4.80% and 4.95%, and then the protein glutaminase (manufactured by Amano Enzyme Inc., 500 U/g, derived from genus Chryseobacterium; hereinafter abbreviated as PG) solution (60 U/ml) were added by 0.5-6.0 U per 1g of protein in milk thereto, respectively, and then subjected to reaction at 55°C for 60 minutes. Subsequently, the enzyme was deactivated by heating the resulting mixtures at 95°C for 2 minutes in a boiling bath, and then the resultant was cooled to obtain fat-free milk having different deamidation ratio. PG was added by 15 U per 1g of protein in milk to the above obtained milk, and the milk with PG was reacted with the same condition (reaction at 55°C for 60 minutes) to measure an amount of ammonia when the deamidation reaction reached almost saturation, provided that the deamidation ratio is 100%. The amount of ammonia in each PG treated sample with adjusted protein amount was measured in accordance with the method described in paragraph [0043] of the present specification. As the result, each sample was PG treated fat-free milk, in which the deamidation ratios were 74.5%, 75.2%, 64.8%, 32.5%, 26.0%, 20.1% for the protein content 4.5%; the deamidation ratios were 27.2%, 20.6%, 13.7% for the protein content 4.65%; the deamidation ratios were 27.5%, 22.3%, 14.4%, 8.3% for the protein content 4.8%; and the deamidation ratios were 65.4%, 14.4%, 8.1% for the protein content 4.95%, respectively. In addition, the fat-free milk (in which the deamidation ratio was 0%) treated similarly except PG addition was a control product.

These protein adjusted fat-free milks having different deamidation ratios were cooled to 47°C, then the starter (Christian Hansen DVS YC-370, 17.7mg/ml of fat-free milk) was added thereto, stirred completely and poured to each sample cup per 40g, and then the cups were fermented in a thermostatic bath at 44°C. About 4 hours later, the fermentation was stopped by transferring them into a refrigerator when pH became 4.6, and stationary-type yoghurts (also called as set-yoghurt) were obtained. In addition, the low-heat defatted milk powder (Yotsuba NyugyoCo., protein 35.6%) was added to commercially available whole-fat milk (Magokoro Rakuno 3.6 Gyunyu, Takanashi Nyugyo Co., milk fat 3.7%, protein 3.2%), and the protein content was adjusted to 3.9%, and the yoghurt prepared similarly except PG addition was a target product.

The next day, as a measurement of physical property of yoghurt returned to normal temperature, adhesiveness thereof was measured by the texture analyzer (Stable Microsystems TX-TX2i). Then, they were cooled again in a refrigerator, and subjected to a sensory test by a panel of 5 skilled persons. The result is shown in Table 1. As shown in Table 1, as compared to control and comparative products, the surface roughness disappeared, and the texture of creaminess and smoothness were equivalent to or higher than the whole-fat yogurt in the products of the present invention having that the deamidation ratio was 26.0 % or more at the protein content of 4.5%; the deamidation ratio was 20.6 % or more at the protein content of 4.65%; the deamidation ratio was 14.4 % or more at the protein content of 4.8%; the deamidation ratio was 14.4 % or more at the protein content of 4.95%. Regarding the adhesiveness which is one of indexes of physical properties, according to research and development so far, we have recognized that the texture of creaminess and smoothness of the sensory test and the adhesiveness have positive correlation. For example, in the fat-free yoghurt (protein 4.3%), the sensory test of the texture of creaminess and smoothness on a scale of ten grades shows point 1 which is low in the texture of creaminess and smoothness, and the physical property value of the adhesiveness is also 4.2, and in the low-fat yoghurt (fat 1%, protein 4.3%), the sensory test of the texture of creaminess and smoothness is point 3 and the adhesiveness is 4.9, and in the whole-fat yoghurt (fat 3.7%, protein 3.9%), the sensory test of the texture of creaminess and smoothness is point 6 and the adhesiveness is 5.8. Thus, the value of the adhesiveness also becomes high as the point of the sensory test is high. The adhesiveness has been indicated as an index of the texture of creaminess and smoothness in the present specification, too. It has been recognized that the product of the present invention is superior to point 5.4 of the whole-fat yoghurt, the control product and comparative product regarding the adhesiveness, and it is creamy and smooth from the point of view of the physical property value, too. In addition, the sample in which PG additive amount was large and the deamidation ratio was 65 % or more had a high value of adhesiveness, whereas it was too soft and there was a fat separation in case of the low-fat, and it became unfavorable texture different from the whole-fat yoghurt.

EP 2 474 230 B1

[Table 1]

| Protein content (%) | Sample product | PG additive amount (u/gp) | Deamidati on ratio (%) | Adhesi veness | Comment for Sensory test | Overall evaluation |
|---|---|---|---|---|---|---|
| 3.9 | Target product (whole-fat) | 0.0 | 0.0 | 5.44 | Creamy and smooth | - |
| 4.50 | Comparative product | 6.0 | 74.5 | 8.22 | Although it is smooth, it has hardly solidified. Hard to mention that it has the same texture as whole-fat. | × |
| | Comparative product | 4.5 | 64.8 | 8.42 | Although it is smooth, it is too soft. Thus, hard to mention that it has the same texture as whole-fat. | × |
| | Product of the present invention | 2.5 | 32.5 | 6.76 | It is creamy enough and smooth. It is soft. | ◎ |
| | Product of the present invention | 2.0 | 26.0 | 6.68 | It is creamy and smooth. It is slightly soft. | ○ |
| | Comparative product | 1.5 | 20.1 | 4.83 | There is roughness a little and smoothness is also weak. | × |
| | Control product | 0.0 | 0.0 | 4.53 | Rough. Hardness is almost equivalent to whole-fat. | × |
| 4.65 | Product of the present invention | 2.0 | 27.2 | 6.65 | Texture of creaminess and smoothness are sufficiently exceeding. It is soft. | ◎ |
| | Product of the present invention | 1.5 | 20.6 | 6.50 | Almost equivalent to whole-fat (in both of smoothness and hardness). | ○ |

9

(continued)

| Protein content (%) | Sample product | PG additive amount (u/gp) | Deamidati on ratio (%) | Adhesi veness | Comment for Sensory test | Overall evaluation |
|---|---|---|---|---|---|---|
| | Comparative product | 1.0 | 13.7 | 5.31 | Although it is solid, there is roughness a little and it is not smooth. | × |
| | Control product | 0.0 | 0.0 | 4.81 | It is slightly hard and rough. | × |
| 4.80 | Product of the present invention | 2.0 | 27.5 | 7.25 | Creaminess and smoothness exceeding whole-fat. Slightly soft. | ● |
| | Product of the present invention | 1.5 | 22.3 | 7.05 | Sufficient in texture of creaminess and smoothness. Slightly hard. | ◎ |
| | Product of the present invention | 1.0 | 14.4 | 6.30 | Texture almost equivalent to whole-fat (There is a dense feeling and it exceeds whole-fat.). | ○ |
| | Comparative product | 0.5 | 8.3 | 5.43 | It is rough and hard. Weak in effect although there is smoothness a little. | × |
| | Control product | 0.0 | 0.0 | 4.88 | It feels hard and tight, and is rough. | × |
| 4.95 | Comparative product | 6.0 | 75.2 | 8.62 | Although it is smooth, it has hardly solidified. Hard to mention that it has the same texture as whole-fat. | × |
| | Comparative product | 4.5 | 65.4 | 7.7 | Although it is smooth, it is too soft, and its texture is different from whole-fat. | × |

(continued)

| Protein content (%) | Sample product | PG additive amount (u/gp) | Deamidati on ratio (%) | Adhesi veness | Comment for Sensory test | Overall evaluation |
|---|---|---|---|---|---|---|
| | Product of the present invention | 1.0 | 14.4 | 6.43 | Almost equivalent to whole-fat (although smoothness is a little weak, there is no great difference). | ○ |
| | Comparative product | 0.5 | 8.1 | 5.44 | It is rough and hard (although smoothness is a little weak, there is no great difference). | × |
| | Control product | 0.0 | 0.0 | 5.19 | Although it is hard with a dense feeling, there is much protein and it is rough. There is protein smell. | × |
| Overall: evaluation: evaluative standard (Re: texture of creaminess, smoothness)<br>× : inferior to whole-fat yoghurt<br>○: equivalent to whole-fat yoghurt<br>◎ : a little superior to whole-fat yoghurt<br>●: clearly superior to whole-fat yoghurt | | | | | | |

EXAMPLE 2

The low-heat defatted milk powder (Yotsuba Nyugyo Co., protein 35.6%) was added to commercially available low-fat milk (raw-milk based low-fat milk, Takanashi Nyugyo Co., milk fat 1.0%, protein 3.3%) to adjust the protein content to 4.0%, 4.15%, 4.3% and 4.45%, and then the PG solution (60 U/ml) was added by 0.5-6.0 U per 1g of protein in the milk thereto, respectively, followed by reaction at 55°C for 60 minutes. Subsequently, the enzyme was deactivated by heating the resulting mixtures at 95°C for 2 minutes in a boiling bath, and then the resultant was cooled to obtain low-fat milks having different deamidation ratio. The deamidation ratio in each PG treated milk was measured using the same method as the Example 1. As a result, each sample was PG treated low-fat milk, in which the deamidation ratios were 28.6%, 22.9% for 4.0% protein; the deamidation ratios were 30.2%, 24.8%, 15.4% for 4.15% protein; the deamidation ratios were 30.4%, 23.7%, 15.6%, 9.5% for 4.3% protein; and the deamidation ratios were 16.2%, 9.5% for 4.45% protein, respectively. In addition, the low-fat milk treated similarly except for PG addition was a control product.

These protein adjusted low-fat milks having different deamidation ratios were cooled to 47°C, then the starter (Christian Hansen DVS YC-370 17.7mg/ml of low-fat milk) was added thereto, stirred completely and poured to each sample cup per 40g, followed by fermentation in a thermostatic bath at 44°C. About 4 hours later, the fermentation was stopped by transferring them into a refrigerator when pH became 4.6, and set-yoghurts were obtained. In addition, the target product in Example 1 was a target product.

The next day, as a measurement of physical property of yoghurt returned to normal temperature, adhesiveness thereof was measured by the texture analyzer. Then, they were cooled again in a refrigerator, and subjected to a sensory test by a panel of 5 skilled persons. The result is shown in Table 2. As shown in Table 2, as compared to control and comparative products, the surface roughness disappeared, and the texture of creaminess and smoothness were equivalent to or higher than the whole-fat yogurt in the products of the present invention having the condition that the deamidation ratio was 28.6 % or more at 4.0% protein; the deamidation ratio was 24.8 % or more at 4.15% protein; the deamidation ratio was 15.6 % or more at 4.3% protein; the deamidation ratio was 9.5 % or more at 4.45% protein. It was recognized that the products of the present invention were superior to 5.4 of the whole-fat yoghurt, the control product and comparative product also regarding the adhesiveness, and it was creamy and smooth from the point of view of the physical property value, too. In addition, the sample in which PG additive amount was large and the deamidation ratio was 65 % or more had a high value of adhesiveness; however, it was too soft and there was a fat separation in case of the low-fat, resulting in an unfavorable texture different from the whole-fat yoghurt.

[Table 2]

| Protein content (%) | Sample product | PG additive amount (u/gp) | Deamidati on ratio (%) | Adhesi veness | Comment for Sensory test | Overall evaluation |
|---|---|---|---|---|---|---|
| 3.9 | Target product | 0.0 | 0.0 | 5.44 | Creamy and smoothness | - |
| 4.00 | Comparati ve product | 6.0 | 77.1 | 7.16 | Although it is smooth, it has not solidified. Different texture from that of whole-fat. Fat is also separated. | × |
| | Comparati ve product | 4.5 | 65.8 | 7.2 | It is smooth and too soft, so that texture is different from that of whole-fat. Fat is also separated. | × |
| | Product of the present invention | 2.0 | 28.6 | 5.59 | Although there are a texture of creaminess and smoothness, it is a little softly and light. | ○ |
| | Comparati ve product | 1.5 | 22.9 | 5.39 | Although it is slightly smooth, it is weak and there is roughness. | × |
| | Control product | 0.0 | 0 | 4.36 | It is soft and watery and there is roughness. | × |

(continued)

| Protein content (%) | Sample product | PG additive amount (u/gp) | Deamidati on ratio (%) | Adhesi veness | Comment for Sensory test | Overall evaluation |
|---|---|---|---|---|---|---|
| 4.15 | Product of the present invention | 2.0 | 30.2 | 5.88 | Sufficient texture of creaminess and smoothness. Slightly soft. | ◎ |
| | Product of the present invention | 1.5 | 24.8 | 5.80 | Although there are a texture of creaminess and smoothness, it is a little softly and light. | ○ |
| | Comparati ve product | 1.0 | 15.4 | 5.16 | Although it is slightly smooth, it is weak and there is roughness. | × |
| | Control product | 0.0 | 0.0 | 4.69 | It is slightly soft and watery, and rough. | × |
| 4.30 | Product of the present invention | 2.0 | 30.4 | 6.17 | Creaminess and smoothness exceeding whole-fat. Hardness is equivalent to whole-fat. | ● |
| | Product of the present invention | 1.5 | 23.7 | 6.10 | Sufficient texture of creaminess, smoothness and hardness. | ◎ |
| | Product of the present invention | 1.0 | 15.6 | 5.93 | Texture of creaminess and roughness are almost equivalent to whole-fat. | ○ |
| | Comparati ve product | 0.5 | 9.5 | 5.23 | Although it is slightly smooth, it is weak and there is roughness. | × |
| | Control product | 0.0 | 0.0 | 4.90 | It is slightly watery, and rough. | × |

(continued)

| Protein content (%) | Sample product | PG additive amount (u/gp) | Deamidati on ratio (%) | Adhesi veness | Comment for Sensory test | Overall evaluation |
|---|---|---|---|---|---|---|
| 4.45 | Comparati ve product | 6.0 | 77.9 | 7.95 | Although it is smooth, it has not solidified. Different texture from that of whole-fat. Fat is also separated. | ✕ |
| | Comparati ve product | 4.5 | 66.5 | 6.48 | It is smooth and too soft, so that texture is different from that of whole-fat. Fat is also separated. | ✕ |
| | Product of the present invention | 1.0 | 16.2 | 6.11 | Sufficient texture of creaminess, smoothness and hardness. | ◎ |
| | Product of the present invention | 0.5 | 9.5 | 5.60 | Texture of creaminess and roughness are almost equivalent to whole-fat. Slightly rough. | ○ |
| | Control product | 0.0 | 0.0 | 5.30 | Although hardness is almost equivalent to whole-fat, there is rough feeling. | ✕ |
| Overall evaluation: evaluative standard (Re: texture of creaminess, smoothness)<br>✕ : inferior to whole-fat yoghurt<br>○: equivalent to whole-fat yoghurt<br>◎ : a little superior to whole-fat yoghurt<br>●: clearly superior to whole-fat yoghurt | | | | | | |

EXAMPLE 3

PG was added to low-heat defatted milk powder (Yotsuba Nyugyo Co., protein 35.6%) solution (10% w/w) under the fully deamidating conditions; that is, by 12.5 U per 1g of protein, and then subjected to reaction at 55°C for 60 minutes. Subsequently, the enzyme was deactivated by heating in a boiling bath until the temperature reached 80 °C, followed by cooling. Further, for powderization, it was subjected to freeze-drying after freezing at -80°C to prepare PG treated defatted milk powder having 100% deamidation ratio. This PG treated defatted milk powder was dissolved in the low-fat milk so as to have 4.4% of protein content, and the resultant was sterilized by heating at 95°C for 2 minutes in a boiling bath, and then was cooled to obtain a PG treated defatted milk powder added low-fat milk (the deamidation ratio was 27.6%) (deamidated milk protein addition method).

The low-heat defatted milk powder (Yotsuba Nyugyo Co., protein 35.6%) was added to the low-fat milk (Takanashi Nyugyo Co., milk fat 1.0%, protein 3.3%) to adjust the protein content to 4.4%, and then the PG solution (60 U/ml) was added thereto by 0U, 1.5U, 1.75U per 1g of protein in the milk, respectively, in order that the deamidation ratio becomes 20-30%, followed by reaction at 55°C for 60 minutes. Subsequently, the enzyme was deactivated by heating the resulting mixtures at 95°C for 2 minutes in a boiling bath, and then the resultant was cooled to obtain low-fat milks having different deamidation ratio (the deamidation ratios were 23.6%, 29.3%) were obtained (pre-incubation method).

The above PG treated defatted milk powder added low-fat milk and the low-fat milk having deamidation ratio of 23.6% or 29.3% was cooled to 47 °C, then the starter (Christian Hansen DVS YC-370 17.7mg/ml of low-fat milk) was added thereto, and stirred completely and poured to each sample cup per 40g, followed by fermentation in an thermostatic bath kept at 44°C. About 4 hours later, the fermentation was stopped by transferring them into a refrigerator when pH became 4.6, and set-yoghurts were obtained. The next day, as a measurement of physical property of yoghurt returned to room temperature, adhesiveness thereof was measured by the texture analyzer. Then, they were cooled again in a refrigerator, and subjected to a sensory test by a panel of 5 skilled persons. The result is shown in Table 3. As shown in Table 3, it was recognized that yoghurt having similar deamidation ratio due to the PG treated defatted milk powder addition method (deamidated milk protein addition method) and pre-incubation method have the same degree of the texture of creaminess and smoothness, and also mostly coincident adhesiveness. That is, it was recognized that equivalent texture and physical property can be obtained by controlling the deamidation ratio for the PG treated defatted milk powder addition method and pre-incubation method.

[Table 3]

| Protein content (%) | PG additive amount (µ/gp) | Deamidation ratio | Adhesiveness | Comment for Sensory test | Overall evaluation |
|---|---|---|---|---|---|
| 4.4 | 0 | 0 | 4.91 | Rough. Hardness is almost equivalent to whole-fat. | × |
| | 1.5 | 23.6 | 6.53 | Hardness, smoothness and texture of creaminess are equivalent to whole-fat. | ○ |
| | 1.75 | 29.3 | 6.59 | A little hard. Smoothness and texture of creaminess are equivalent or superior to whole-fat and equivalent to modified powdered milk. | ◎ |
| | modified powdered milk | 27.6 | 6.68 | Smoothness and texture of creaminess are equivalent or superior to whole-fat. Hardness is equivalent to whole-fat. | ◎ |

Overall evaluation: evaluative standard (Re: texture of creaminess, smoothness)

× : inferior to whole-fat yoghurt

○: equivalent to whole-fat yoghurt

◎ : a little superior to whole-fat yoghurt

●: clearly superior to whole-fat yoghurt

COMPARATIVE EXAMPLE 1

PG was added to 10% (w/w) solution of whey protein "Bipro" (DAVISCO JE189-7-440. protein 95%) and "Enlact HG" (Nihon Shinyaku Co., protein 80%) as other milk protein under the fully deamidating conditions of PG; that is, by 65.8 U per 1g of protein in "Bipro" solution and 78.1 U per 1g of protein in "Enlact HG" solution, respectively, and then subjected to reaction at 50°C for 60 minutes. Subsequently, the enzyme was deactivated by heating in a boiling bath until the temperature reached 80°C, and then the reactant was cooled. Further, for powderization, it was subjected to freeze-drying after freezing at -80°C to prepare whey proteins due to the PG treatment. The preparation, which was prepared similarly without enzymatic addition, was made an untreated whey protein.

The PG treated whey protein "Bipro" and the untreated whey protein "Bipro" were dissolved into the low-fat milk (Takanashi Nyugyo Co., milk fat 1.0%, protein 3.3%) to contain protein content 4.1% and 4.7%, respectively; and the PG treated whey protein "Enlact HG" and the untreated whey protein "Enlact HG" were dissolved into the low-fat milk (Takanashi Nyugyo, milk fat 1.0%, protein 3.3%) so as to contain protein content 3.9%, respectively. Then, the resulting dissolved solutions were sterilized by heating at 95°C for 2 minutes in a boiling bath, and were cooled to 47°C, then the starter (Christian Hansen DVS YC-370 17.7mg/ml of low-fat milk) was added thereto, stirred completely and poured to each sample cup per 40g, followed by fermentation in a thermostatic bath kept at 44°C. About 4 hours later, the fermentation was stopped by transferring them into a refrigerator when pH became 4.6, and set-yoghurt was obtained. The next day, as a measurement of physical property of yoghurt returned to room temperature, adhesiveness thereof was measured by the texture analyzer. Then, they were cooled again in a refrigerator, and subjected to a sensory test by a panel of 5 skilled persons. The result is shown in Table 4. As shown in Table 4, although the PG treated whey protein "Bipro" was softer than the untreated one, and became a little smooth, its texture of creaminess and smoothness were weak and whey smell was strong. In a similar way, the PG treated whey protein "Enlact HG" was softer than the untreated one, and the texture of creaminess and the smoothness were weak.

[Table 4]

| Protein content (%) | Whey product | PG additive amount (u/gp) | Adhesiveness | Comment for Sensory test | Overall evaluation |
|---|---|---|---|---|---|
| 4.1 | WPI "Bipro" | 65.8 | 3.93 | A little soft, smoothness is also weak, whey smell is strong | × |
| | | 0 | 4.25 | Very hard. Rough and coarse | × |
| 4.7 | WPI "Bipro" | 65.8 | 4.04 | Smoothness and texture of creaminess are weak. Hardness is almost equivalent. Whey smell is strong. | × |
| | | 0 | 4.29 | Very hard. Roughness. (hardness like agar) | × |
| 3.9 | WPC "Enlact HG" | 78.1 | 4.05 | Soft and watery. whey smell. smoothness and texture of creaminess, but weak. | × |
| | | 0 | 3.67 | A little soft, smoothness is weak | × |
| Overall evaluation: evaluative standard (Re: texture of creaminess, smoothness)<br>× : inferior to the whole-fat yoghurt | | | | | |

According to the present invention, the low-fat or fat-free yoghurt having richness and creamy-texture like yoghurt produced with material milk which is not adjusting the amount of fat (whole-fat milk) can be obtained; thereby, the present invention is useful for the food industries.

**Claims**

1. A method for producing a yoghurt, comprising: a) a step of adding a casein-containing milk protein to a fat-free milk in which milk fat content is 0.0% by weight or more and less than 0.5% by weight to prepare a milk raw material mixed-solution in which milk protein content is 4.5% by weight or more and 4.8% by weight or less; b) a step of adding and acting a protein deamidating enzyme to the milk raw material mixed-solution to prepare a deamidated milk raw material mixed-solution in which a deamidation ratio X of the milk protein in the milk raw material mixed-solution meets a following formula:

$$-39.3 \times \text{milk protein content} (\%) + 198 \leqq X (\%) \leqq 64$$

and c) a step of adding a starter to the deamidated milk raw material mixed-solution.

2. A method for producing a yoghurt, comprising: a) a step of adding a casein-containing milk protein to a fat-free milk in which milk fat content is 0.0% by weight or more and less than 0.5% by weight to prepare a milk raw material mixed-solution in which milk protein content is 4.8% by weight or more and 5.0% by weight or less; b) a step of adding and acting a protein deamidating enzyme to the milk raw material mixed-solution to prepare a deamidated milk raw material mixed-solution in which a deamidation ratio of the milk protein in the milk raw material mixed-solution is 9% or more and 64% or less; and c) a step of adding a starter to the deamidated milk raw material mixed-solution.

3. A method for producing a yoghurt, comprising: a) a step of adding and acting water and a protein deamidating enzyme to a casein-containing milk protein to prepare a deamidated milk protein; b) a step of adding the deamidated milk protein to a fat-free milk in which milk fat content is 0.0% by weigh or more and less than 0.5% by weight to prepare a milk raw material mixed-solution in which milk protein content is 4.5% by weight or more and 4.8% by weight or less and a deamidation ratio X of the milk protein in the milk raw material mixed-solution meets a following formula:

$$-39.3 \times \text{milk protein content} (\%) + 198 \leqq X (\%) \leqq 64$$

and c) a step of adding a starter to the milk raw material mixed-solution.

4. A method for producing a yoghurt, comprising: a) a step of adding and acting water and a protein deamidating enzyme to a casein-containing milk protein to prepare a deamidated milk protein; b) a step of adding the deamidated milk protein to a fat-free milk in which milk fat content is 0.0% by weigh or more and less than 0.5% by weight to prepare a milk raw material mixed-solution in which milk protein content is 4.5% by weight or more and 4.8% by weight or less and a deamidation ratio X of the milk protein in the milk raw material mixed-solution is 9% or more and 64% or less; and c) a step of adding a starter to the milk raw material mixed-solution.

5. A method for producing a yoghurt, comprising: a) a step of adding a casein-containing milk protein to a low-fat milk in which milk fat content is 0.5% by weight or more and less than 1.5% by weight to prepare a milk raw material mixed-solution in which milk protein content is 4.0% by weight or more and 4.5% by weight or less; b) a step of adding and acting a protein deamidating enzyme to the milk raw material mixed-solution to prepare a deamidated milk raw material mixed-solution in which a deamidation ratio X of the milk protein in the milk raw material mixed-solution meets a following formula:

$$-44.3 \times \text{milk protein content} (\%) + 201 \leqq X (\%) \leqq 64$$

and c) a step of adding a starter to the deamidated milk raw material mixed-solution.

6. A method for producing a yoghurt, comprising: a) a step of adding and acting water and a protein deamidating enzyme to a casein-containing milk protein to prepare a deamidated milk protein; b) a step of adding the deamidated milk protein to a low-fat milk in which milk fat content is 0.5% by weight or more and 1.5% by weight or less to prepare a milk raw material mixed-solution in which milk protein content is 4.0% by weight or more and 4.5% by weight or less and a deamidation ratio X of the milk protein in the milk raw material mixed-solution meets a following formula:

$$-44.3 \times \text{milk protein content} (\%) + 201 \leqq X (\%) \leqq 64$$

and c) a step of adding a starter to the milk raw material mixed-solution.

7. The method according to any one of claims 1 to 6, wherein the protein deamidating enzyme is an enzyme derived from the genus Chryseobacterium.

8. The method according to any one of claims 1 to 7, wherein additive amount of the protein deamidating enzyme is 0.01-100 units per 1g of the milk protein.

9. The method according to any one of claims 1 to 8, wherein the milk protein is defatted milk powder.

10. A yoghurt produced by the method according to any one of claims 1 to 9.

**Patentansprüche**

1. Verfahren zum Herstellen eines Joghurts, welches umfasst: a) eine Stufe, in der ein Casein enthaltendes Milchprotein zu einer fettfreien Milch gegeben wird, worin der Milchfettanteil 0,0 Gew.-% oder mehr und weniger als 0,5 Gew.-% ist, wobei eine Milchausgangsmaterialmischlösung zubereitet wird, in der der Milchproteingehalt 4,5 Gew.-% oder mehr und 4,8 Gew.-% oder weniger ist; b) eine Stufe, in der ein Proteindeamidierungsenzym zu der Milchausgangsmaterialmischlösung gegeben und damit umgesetzt wird, wobei eine Mischlösung von deamidiertem Milchausgangsmaterial zubereitet wird, worin das Deamidierungsverhältnis X des Milchproteins in der Milchausgangsmaterialmischlösung die folgende Formel erfüllt:

$$-39,3 \text{ x Milchproteingehalt (\%)} + 198 \leq x \text{ (\%)} \leq 64$$

und c) eine Stufe, in der ein Starter zu der Mischlösung von deamidiertem Milchausgangsmaterial gegeben wird.

2. Verfahren zum Herstellen eines Joghurts, welches umfasst: a) eine Stufe, in der ein Casein enthaltendes Milchausgangsmaterial zu einer fettfreien Milch gegeben wird, worin der Milchfettgehalt 0,0 Gew.-% oder mehr und weniger als 0,5 Gew.-% ist, wobei eine Milchausgangsmaterialmischlösung zubereitet wird, in der der Milchproteingehalt 4,8 Gew.-% oder mehr und 5,0 Gew.-% oder weniger ist; b) eine Stufe, in der ein Proteindeamidierungsenzym zu der Milchausgangsmaterialmischlösung gegeben und damit umgesetzt wird, wobei eine Mischlösung von deamidiertem Milchausgangsmaterial zubereitet wird, in der das Deamidierungsverhältnis des Milchproteins in der Milchausgangsmaterialmischlösung 9 % oder mehr und 64 % oder weniger ist; und c) eine Stufe, in der ein Starter zu der Mischlösung von deamidiertem Milchausgangsmaterial gegeben wird.

3. Verfahren zum Herstellen eines Joghurts, welches umfasst: a) eine Stufe, in der Wasser und ein Proteindeamidierungsenzym zu einem Casein enthaltenden Milchprotein gegeben und damit umgesetzt werden, wobei ein deamidiertes Milchprotein zubereitet wird; b) eine Stufe, in der das deamidierte Milchprotein zu einer fettfreien Milch gegeben wird, worin der Milchfettgehalt 0,0 Gew.-% oder mehr und weniger als 0,5 Gew.-% ist, wobei eine Milchausgangsmaterialmischlösung zubereitet wird, worin der Milchproteingehalt 4,5 Gew.-% oder mehr und 4,8 Gew.-% oder weniger ist und das Deamidierungsverhältnis X des Milchproteins in der Milchausgangsmaterialmischlösung die folgende Formel erfüllt:

$$-39,3 \text{ x Milchproteingehalt (\%)} + 198 \leq x \text{ (\%)} \leq 64$$

und c) eine Stufe, in der ein Starter zu der Milchausgangsmaterialmischlösung gegeben wird.

4. Verfahren zum Herstellen eines Joghurts, welches umfasst: a) eine Stufe, in der Wasser und ein Proteindeamidierungsenzym zu einem Casein enthaltenden Milchprotein gegeben und damit umgesetzt werden, wobei ein deamidiertes Milchprotein zubereitet wird; b) eine Stufe, in der das deamidierte Milchprotein zu einer fettfreien Milch gegeben wird, worin der Milchfettgehalt 0,0 Gew.-% oder mehr und weniger als 0,5 Gew.-% ist, wobei eine Milchausgangsmaterialmischlösung zubereitet wird, worin der Milchproteingehalt 4,5 Gew.-% oder mehr und 4,8 Gew.-% oder weniger ist und das Deamidierungsverhältnis X des Milchproteins in der Milchausgangsmaterialmischlösung 9 % oder mehr und 64 % oder weniger ist; und c) eine Stufe, in der ein Starter zu der Milchausgangsmaterialmischlösung gegeben wird.

**5.** Verfahren zum Herstellen eines Joghurts, welches umfasst: a) eine Stufe, in der ein Casein enthaltendes Milchprotein zu ,einer fettarmen Milch gegeben wird, worin der Milchfettgehalt 0,5 Gew.-% oder mehr und weniger als 1,5 Gew.-% ist, wobei eine Milchausgangsmaterialmischlösung zubereitet wird, worin der Milchproteingehalt 4,0 Gew.-% oder mehr und 4,5 Gew.-% oder weniger ist; b) eine Stufe, in der ein Proteindeamidierungsenzym zu der Milchausgangsmaterialmischlösung gegeben und damit umgesetzt wird, wobei eine Mischlösung von deamidiertem Milchausgangsmaterial zubereitet wird, worin das Deamidierungsverhältnis X des Milchproteins in der Milchausgangsmaterialmischlösung die folgende Formel erfüllt:

$$-44{,}3 \ x \ Milchproteingehalt \ (\%) \ + \ 201 \ \leq \ X \ (\%) \ \leq \ 64$$

und c) eine Stufe, in der ein Starter zu der Mischlösung von deamidiertem Milchausgangsmaterial gegeben wird.

**6.** Verfahren zum Herstellen eines Joghurts, welches umfasst: a) eine Stufe, in der Wasser und ein Proteindeamidierungsenzym zu einem Casein enthaltenden Milchprotein gegeben und damit umgesetzt werden, wobei ein deamidiertes Milchprotein zubereitet wird; b) eine Stufe, in der das deamidierte Milchprotein zu einer fettarmen Milch gegeben wird, worin der Milchfettgehalt 0,5 Gew.-% oder mehr und 1,5 Gew.-% oder weniger ist, wobei eine Milchausgangsmaterialmischlösung zubereitet wird, worin der Milchproteingehalt 4,0 Gew.-% oder mehr und 4,5 Gew.-% oder weniger ist und das Deamidierungsverhältnis X des Milchproteins in der Milchausgangsmaterialmischlösung die folgende Formel erfüllt:

$$-44{,}3 \ x \ Milchproteingehalt \ (\%) \ + \ 201 \ \leq \ X \ (\%) \ \leq \ 64$$

und c) eine Stufe, in der ein Starter zu der Milchausgangsmaterialmischlösung gegeben wird.

**7.** Verfahren nach einem der Ansprüche 1 bis 6, wobei das Proteindeamidierungsenzym ein von der Gattung Chryseobacterium abgeleitetes Enzym ist.

**8.** Verfahren nach einem der Ansprüche 1 bis 7, wobei die Zugabemenge des Proteindeamidierungsenzyms 0,01 bis 100 Einheiten pro 1 g des Milchproteins ist.

**9.** Verfahren nach einem der Ansprüche 1 bis 8, wobei das Milchprotein entfettetes Milchpulver ist.

**10.** Durch das Verfahren nach einem der Ansprüche 1 bis 9 hergestellter Joghurt.


**Revendications**

**1.** Procédé de production d'un yaourt, comprenant : a) une étape d'addition d'une protéine de lait contenant de la caséine à un lait exempt de graisse dans lequel la teneur en graisse du lait est supérieure ou égale à 0,0 % en masse et inférieure à 0,5 % en masse pour préparer une solution mixée de matière première de lait dans laquelle la teneur en protéine de lait est supérieure ou égale à 4,5 % en masse et inférieure ou égale à 4,8 % en masse ; b) une étape d'addition et d'action d'un enzyme de déamidation de protéine à la solution mixée de matière première de lait pour préparer une solution mixée de matière première de lait déamidée dans laquelle un taux de déamidation X de la protéine de lait dans la solution mixée de matière première de lait satisfait la formule suivante :

$$- \ 39{,}3 \ x \ teneur \ en \ protéine \ de \ lait \ (\%) \ + \ 198 \leq X \ (\%) \leq 64$$

et c) une étape d'addition d'une culture bactérienne d'acide lactique à la solution mixée de matière première de lait déamidée.

**2.** Procédé de production d'un yaourt, comprenant : a) une étape d'addition d'une protéine de lait contenant de la caséine à un lait exempt de graisse dans lequel la teneur en graisse du lait est supérieure ou égale à 0,0 % en masse et inférieure à 0,5 % en masse pour préparer une solution mixée de matière première de lait dans laquelle la teneur en protéine de lait est supérieure ou égale à 4,8 % en masse et inférieure ou égale à 5,0 % en masse ;

b) une étape d'addition et d'action d'un enzyme de déamidation de protéine à la solution mixée de matière première de lait pour préparer une solution mixée de matière première de lait déamidée dans laquelle un taux de déamidation de la protéine de lait dans la solution mixée de matière première de lait est supérieur ou égal à 9 % et inférieur à 64 % ; et c) une étape d'addition d'une culture bactérienne d'acide lactique à la solution mixée de matière première de lait déamidée.

3. Procédé de production d'un yaourt, comprenant : a) une étape d'addition et d'action d'eau et d'un enzyme de déamidation de protéine à une protéine de lait contenant de la caséine pour préparer une protéine de lait déamidée ; b) une étape d'addition de la protéine de lait déamidée à un lait exempt de graisse dans lequel la teneur en graisse du lait est supérieure ou égale à 0,0 % en masse et inférieure à 0,5 % enmasse pour préparer une solution mixée de matière première de lait dans laquelle une teneur en protéine de lait est supérieure ou égale à 4,5 % en masse et inférieure ou égale à 4,8 % en masse et un taux de déamidation X de la protéine de lait dans la solution mixée de matière première de lait satisfait la formule suivante :

$$- 39{,}3 \times \text{teneur en protéine de lait (\%)} + 198 \leq X\ (\%) \leq 64$$

et c) une étape d'addition d'uneculture bactérienne d'acide lactique à la solution mixée de matière première de lait.

4. Procédé de production d'un yaourt, comprenant : a) une étape d'addition et d'action d'eau et d'un enzyme de déamidation de protéine à une protéine de lait contenant de la caséine pour préparer une protéine de lait déamidée ; b) une étape d'addition de la protéine de laitdéamidée à un lait exempt de graisse dans lequel la teneur en graisse du lait est supérieure ou égale à 0,0 % en masse et inférieure à 0,5 % en masse pour préparer une solution mixée de matière première de lait dans laquelle une teneur en protéine de lait est supérieure ou égale à 4,5 % en masse et inférieure ou égale à 4,8 % en masse et un taux de déamidation X de la protéine de lait dans la solution mixée de matière première de lait est supérieur ou égal à 9 % et inférieur ou égal à 64 % ; et c) une étape d'addition d'uneculture bactérienne d'acide lactique à la solution mixée de matière première de lait.

5. Procédé de production d'un yaourt, comprenant : a) une étape d'addition d'une protéine de lait contenant de la caséine à un lait de faible teneur en graisse dans lequel la teneur en graisse du lait est supérieure ou égale à 0,5 % en masse et inférieure à 1,5 % en masse pour préparer une solution mixée de matière première de lait dans laquelle la teneur en protéine de lait est supérieure ou égale à 4,0 % en masse et inférieure ou égale à 4,5 % en masse ; b) une étape d'addition et d'action d'un enzyme de déamidation de protéine à la solution mixée de matière première de lait pour préparer une solution mixée de matière première de lait déamidée dans laquelle un taux de déamidation X de la protéine de lait dans la solution mixée de matière première de lait satisfait la formule suivante :

$$- 44{,}3 \times \text{teneur en protéine de lait (\%)} + 201 \leq X\ (\%) \leq 64$$

et c) une étape d'addition d'uneculture bactérienne d'acide lactique à la solution mixée de matière première de lait déamidée.

6. Procédé de production d'un yaourt, comprenant : a) une étape d'addition et d'action d'eau et d'un enzyme de déamidation de protéine à une protéine de lait contenant de la caséine pour préparer une protéine de lait déamidée ; b) une étape d'addition de la protéine de lait déamidée à un lait de faible teneur en graisse dans lequel la teneur en graisse du lait est supérieure ou égale à 0,5 % en masse et inférieure ou égale à 1,5 % en masse pour préparer une solution mixée de matière première de lait dans laquelle la teneur en protéine de lait est supérieure ou égale à 4,0 % en masse et inférieure ou égale à 4,5 % en masse et un taux de déamidation X de la protéine de lait dans la solution mixée de matière première de lait satisfait la formule suivante :

$$- 44{,}3 \times \text{teneur en protéine de lait (\%)} + 201 \leq X\ (\%) \leq 64$$

et c) une étape d'addition d'uneculture bactérienne d'acide lactique à la solution mixée de matière première de lait.

7. Procédé selon l'une quelconque des revendications 1 à 6, dans lequel l'enzyme de déamidation de protéine est un enzyme dérivé du genre Chryséobactérium.

8. Procédé selon l'une quelconque des revendications 1 à 7, dans lequel la quantité d'additif de l'enzyme de déamidation de protéine est de 0,01- 100 unités pour 1 g de la protéine de lait.

9. Procédé selon l'une quelconque des revendications 1 à 8, dans lequel la protéine de lait est une poudre de lait écrémé.

10. Yaourt produit par le procédé selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56124342 A
- JP 7236451 A
- JP 8000170 A
- JP 7022497 B
- JP P200050887 A
- JP P2001218590 A
- JP P2003250460 A
- WO 2006075772 A
- JP 2000050887 A
- JP 2001021850 A

**Non-patent literature cited in the description**

- **YAMAGUCHI et al.** *Appl. Environ. Microbiol.,* 2000, vol. 66, 3337-3343
- *Eur. J. Biochem,* 2001, vol. 268, 1410-1421